# EUROPÄISCHE PATENTSCHRIFT

(11) **EP 1 623 143 B1**
(45) Veröffentlichungstag und Bekanntmachung des Hinweises auf die Patenterteilung: **08.06.2011**
(21) Anmeldenummer: 04729061.4
(22) Anmeldetag: 23.04.2004
(51) Int. Cl.: F16H 25/22

(54) **KUGELGEWINDETRIEB**
BALL SCREW
VIS D'ENTRAINEMENT A BILLES

(30) Priorität: 09.05.2003 DE 10320948
(43) Veröffentlichungstag der Anmeldung: 08.02.2006
(73) Patentinhaber: Schaeffler Technologies GmbH & Co. KG, 91074 Herzogenaurach (DE)
(72) Erfinder: MAYER, Ralf, 91074 Herzogenaurach (DE); OSTERLÄNGER, Jürgen, 91448 Emskirchen (DE); KRAUS, Manfred, 91074 Herzogenaurach (DE)
(86) Internationale Anmeldenummer: PCT/EP2004/004307
(87) Internationale Veröffentlichungsnummer: WO 2004/099651

(56) Entgegenhaltungen:
- WO-A-01/44689
- DE-A- 4 131 486
- US-A- 3 009 367
- US-A- 4 612 817

## Beschreibung

Die vorliegende Erfindung betrifft einen Kugelgewindetrieb, bei dem eine Spindelmutter auf einer Spindel über Kugeln wälzgelagert ist. Derartige Kugelgewindetriebe dienen der Umwandlung einer rotatorischen Bewegung in eine translatorische Bewegung und finden beispielsweise Anwendung im Kraftfahrzeugbereich bei der Lenksäulenverstellung, der Drosselklappenverstellung, der Gangschaltung, der elektrischen Türverriegelung oder der Niveauregelung am Federbein.

Aus US 3 009 367 beispielsweise ist ein Kugelgewindetrieb nach den Merkmalen des Oberbegriffs Anspruchs 1 bekanntgeworden. Insgesamt drei axial hintereinander angeordnete Ringe weisen umfangsseitig jeweils einen Schlitz auf. Der Schlitz eines jeden Ringes liegt in dem Umlenkbereich des Umlenkkanals. Ein Umlenkeinsatz ist vorgesehen, der den offenen Bereich des Umlenkbereichs abdeckt. Der offene Bereich ist gebildet durch die einzelnen Öffnungen, die durch die geschlitzten Ringe entstehen. Derartige Kugelgewindetriebe sind aufwändig in der Herstellung, wobei insbesondere Toleranzen der einzelnen Bauteile eng aufeinander abgestimmt sein müssen, ansonsten Kanten entstehen, die zu unerwünschten Klappergeräuschen oder sogar Verklemmen der Kugeln im Umlenkanal führen können.

Aufgabe der Erfindung ist es, einen Kugelgewindetrieb nach den Merkmalen des Oberbegriffs des Anspruchs 1 anzugeben, der einfacher herstellbar ist und zuverlässiger funktioniert. Erfindungsgemäß wird diese Aufgabe dadurch gelöst, daß die Spindelmutter einen Tragkörper aufweist, in den der Ring gebettet ist, wobei ein Teil des Tragkörpers in den Schlitz eingreift und von dem einen Ende bis zu dem anderen Ende des Ringes reicht. Der Ring ist formschlüssig in den Tragkörper eingebettet und somit einwandfrei über seinen Umfang abgestützt. Dadurch, daß der Tragkörper in den Schlitz eingreift, ist außerdem sichergestellt, daß der Tragkörper und der Schlitz in Umfangsrichtung einwandfrei zueinander positioniert und drehfest zueinander angeordnet sind. Ferner ist die Zahl der Einzelteile reduziert. Während bei dem bekannten Kugelgewindetrieb der Umlaufkanal auf Seiten der Spindelmutter durch den dreiteiligen Ring gebildet ist, sieht die Erfindung einen einzigen geschlitzten Ring vor. Weiter unten ist eine erfindungsgemäße Weiterbildung ausführlich beschrieben, bei der der Umlaufkanal auf Seiten der Spindelmutter durch drei Teile begrenzt ist, nämlich durch den Tragkörper, den Ring und einen Käfig, der aufgrund der Ausbildung der erfindungsgemäßen Spindelmutter keine Betriebslasten übertragen muss.

In Umlenkbereich des Umlenkkanals wird regelmäßig angestrebt, eine kantenfreie Umlenkbahn für die Kugeln zu schaffen. Bei einer kantenfreien Umlenkbahn sind Klappergeräusche oder ein Verkanten der Kugeln ausgeschlossen. Vorzugsweise bildet das in den Schlitz eingreifend Teil des Tragkörpers einen Umlenkbahnabschnitt, an dem die Kugeln einwandfrei entlang geführt sind, wobei das Tragkörperteil umfangsseitig kantenfrei an die den Schlitz begrenzenden Enden des Rings anschließt.

Auf wirtschaftlich günstige Weise lässt sich der Ring aus einem Blechstreifen als Stanzbiegeteil herstellen. Während bei kleinen Ringdurchmessern derartige Ringe auch aus einer Ronde ausgestanzt werden können, bietet sich die Herstellung aus einem Blechstreifen bei größeren Ringdurchmessern an. Denn bei großen Ringdurchmessern müssen große Blechronden verwendet werden, so daß der Abfall nach dem Ausstanzen eines Rings erheblich ist. Dem gegenüber lässt sich der Blechstreifen ohne nennenswerten Materialabfall zu dem Ring umformen und stanzen. Der Blechstreifen ist über seine Erstreckung vorzugsweise wanddickengleich. Im Gegensatz zu einem Tiefziehvorgang behält der Blechstreifen beim Biegen und Stanzen seine Wanddicke bei.

Es können Halteelemente vorgesehen sein die den Ring und den Tragkörper verliersicher miteinander verbinden. Dieses Halteelement kann beispielsweise durch mehrere über den Umfang des Rings angeordnete Krallen gebildet sein, die in Aufnahmen des Tragkörpers eingreifen, oder den Tragkörper hintergreifen.

Der Tragkörper kann auf einfache Art und Weise aus insbesondere thermoplastischen Kunststoff im Spritzverfahren mit dem einstückig daran angeformten Tragkörperteil gebildet sein. Im Spritzwerkzeug kann das Betteil problemlos mit dem daran ausgebildeten Umlenkbahnabschnitt gespritzt werden. Der Ring kann im Anschluß an das Spritzverfahren in den Tragkörper eingelegt werden, jedoch ist auch möglich, daß der Ring bereits in das Spritzwerkzeug eingesetzt und umspritzt wird.

Alternativ kann anstelle des Kunststoffes ein Sinterwerkstoff zur Anwendung kommen. Die Wahl des geeigneten Werkstoffes für den Tragkörper ist abhängig von den Betriebsbedingungen für den erfindungsgemäßen Kugelgewindetrieb, beispielsweise wirksame Druckkräfte.

Ein bevorzugter Kugelgewindetrieb sieht eine Spindelmutter vor, die eine Hülse aufweist, in der der ringförmige Tragkörper angeordnet und gestützt ist.

Nachstehend wird die Erfindung anhand eines in neun Figuren dargestellten Ausführungsbeispiels näher erläutert. Es zeigen
- Figur 1: einen Längsschnitt durch einen erfindungsgemäßen Kugelgewindetrieb
- Figur 2: in vergrößerter Darstellung einen Ausschnitt des erfin- dungsgemäßen Kugelgewindetriebes aus Figur 1
- Figur 3: als Einzelteil einen Ring des erfindungsgemäßen Kugel- gewindetriebes aus Figur 1
- Figur 4: als Einzelteil einen Tragkörper des Kugelgewindetriebes gemäß Figur 1
- Figur 5: den Tragkörper aus Figur 4 in perspektivischer Darstellung
- Figur 6: den Tragkörper aus Figur 5, jedoch mit eingebetteten Ring
- Figur 7: einer Ansicht eines teilmontierten Kugelgewindetriebes.

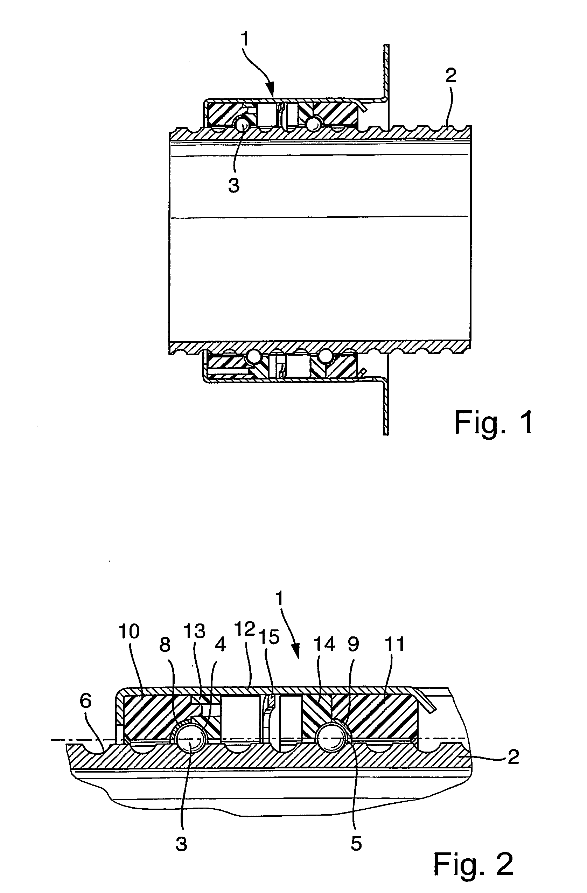

Figur 1 zeigt im Längsschnitt einen erfindungsgemäßen Kugelgewindetrieb, bei dem eine Spindelmutter 1 auf einer Spindel 2 über Kugeln 3 wälzgelagert ist. Figur 2 zeigt eine Ausschnittsvergrößerung der Figur 1. Die Kugeln 3,sind in einer Kugelreihe angeordnet. Vorliegend sind zwei axial beabstandet zueinander angeordnete Kugelreihen vorgesehen, die jeweils in einem von der Spindel 2 und der Spindelmutter 1 begrenzten endlosen Umlaufkanal 4, 5 jeweils entlang einer Windung umlaufen. Eine Windung entspricht einer Windung entlang einer Gewindebahn 6 der Spindel 2. Die Kugeln 3 werden innerhalb eines Umlenkbereichs des Umlaufkanals von einem Auslaufende einer Windung zu einem Einlaufende dieser Windung umgelenkt.

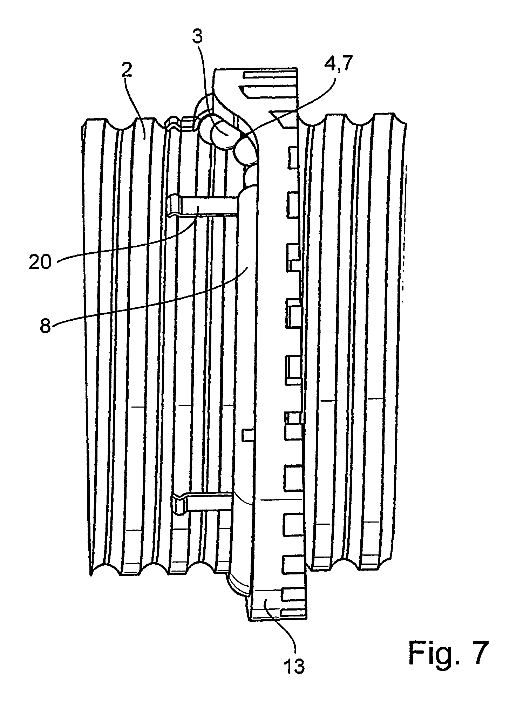

Figur 7 zeigt die in einer Kugelreihe angeordneten Kugeln im Umlaufkanal 4, wobei hier der Umlenkbereich 7 deutlich erkennbar ist.

Zwischen der Spindelmutter 1 und der Spindel 2 werden Kräfte über die Kugeln 3 übertragen, wobei die Kugeln 3 einerseits an der Gewindebahn 6 der Spindel 2 und andererseits an Ringen 8, 9 der Spindelmutter 1 unter Last abwälzen. Die Anordnung ist derart, daß die Kugeln 3 nach Art eines Schrägkugellagers Kräfte etwa in einem Winkel unter 45° zur Spindelachse übertragen. In dem abgebildeten erfindungsgemäßen Ausführungsbeispielen entspricht die Anordnung einer bei Schrägkugellagern bekannten X-Anordnung.

Die Ringe 8, 9 sind in ringförmig ausgebildete Tragkörpern 10, 11 eingebettet. Die ringförmig gebildeten Tragkörper 10, 11 sind aus thermoplastischen Kunststoff im Spritzverfahren hergestellt. Die Tragkörper 10, 11 sind in einer gemeinsamen aus Blech gebildeten Hülse 12 der Spindelmutter 1 positioniert und abgestützt. Die Tragkörper 10, 11 sind baugleich.

Die Umlaufkanäle 4, 5 sind auf Seiten der Spindelmutter 1 begrenzt durch die ringförmigen Tragkörper 10, 11, die Ringe 8, 9 und zwei Käfige 13, 14 von denen der Käfig 13 drehfest an dem Bett 10 und von denen der Käfig 14 drehfest an dem Tragkörper 11 aufgenommen ist. Die Käfige 13, 14 dienen der einwandfreien Führung der Kugeln 3 insbesondere im Umlenkbereich 7 des Umlaufkanals 4 und im nicht weiter dargestellten Umlenkbereich des Umlaufkanals 5. Zwischen diesen beiden Käfigen 13, 14 ist eine in axialer Richtung wirksame Druckfeder 15 angeordnet, die die Käfige 13, 14 in Richtung auf den jeweils zugeordneten Tragkörper 10, 11 anfedert und daran hält. Der Käfig 13 ist deutlich in der Figur 9 abgebildet. Die Käfige 14, 13 sind baugleich.

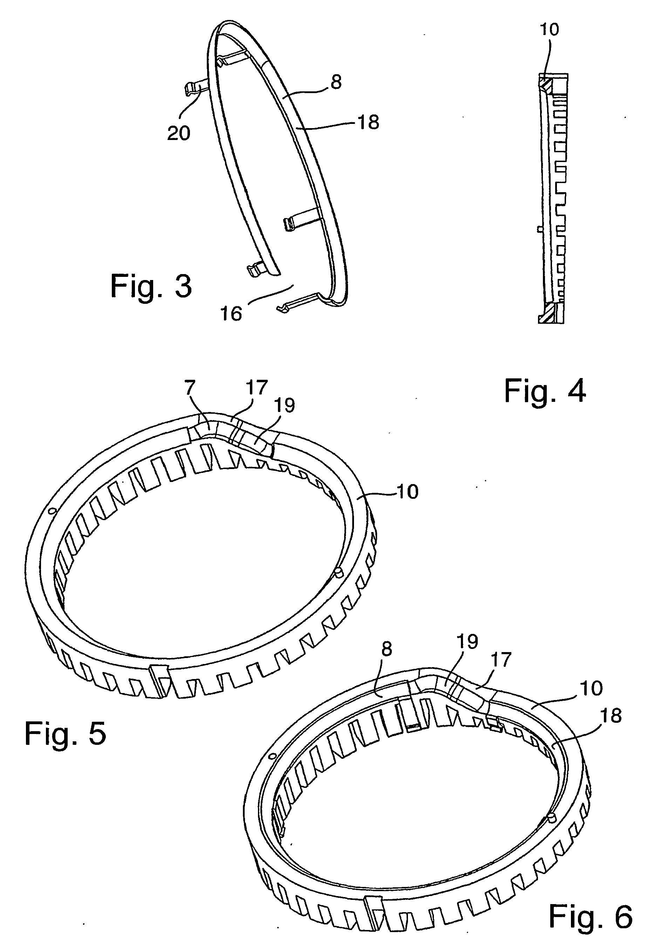

Die Ringe 8, 9 sind gleichartig ausgebildet. Figur 3 zeigt den Ring 8 in perspektivischer Darstellung. Umfangsseitig aneinander gegenüberliegende Enden des Rings 8 begrenzen einen Schlitz 16. Der Ring ist lageorientiert an dem Tragkörper 10 derart angeordnet, daß der Schlitz 16 im Umlenkbereich 7 des Umlauf kanals 4 liegt. Die Ringe 8, 9 sind aus einem Blechstreifen herausgestanzt und umgeformt.

In den Figuren 4, 5 und 6 ist der ringförmige Tragkörper 10 im Längsschnitt und in perspektivischer Darstellung abgebildet, wobei Figur 6 den Tragkörper 10 mit eingebetteten Ring 8 zeigt. Der ringförmige Tragkörper 10 ist derart geformt, das ein zwischen den umfangsseitigen Enden des Ringes 8 gelegenes Tragkörperteil 17 des Tragkörpers 10 in den Schlitz 16 eingreift. Der Ring 8 und der Tragkörper 10 mit dem Tragkörperteil 17 sind derart aufeinander abgestimmt, daß ein kantenfreier Übergang von dem Ring 8 auf den Tragkörperteil 17 gewährleistet ist.

Figur 3 zeigt deutlich, daß der Ring 8 mit einer Kugelbahn 18 für die Kugeln 3 versehen ist. Den Figuren 5 und 6 ist zu entnehmen, daß das Tragkörperteil 17 mit einem Kugelbahnabschnitt 19 versehen ist. Die Kugelbahn 18 des Ringes 8 schließt kantenfrei an den Kugelbahnabschnitt 19 an. Das bedeutet, daß die Kugeln 3 einwandfrei entlang der Kugelbahn 18 und dem Kugelbahnabschnitt 19 abwälzen können ohne zu verkanten. Dadurch, daß der Tragkörperteil 17 in den Schlitz 16 eingreift ist außerdem sichergestellt, daß der Ring 8 einwandfrei gegenüber dem Tragkörper 10 positioniert und drehfest angeordnet ist.

Um sicherzustellen, daß der Ring 7 verliersicher mit dem Tragkörper 10 verbunden ist, sind an dem Ring 8 mehrere über den Umfang verteilt angeordnete Krallen 19 ausgebildet, die in axialer Richtung von dem Ring 8 abstehen. Die Krallen 19 schnappen auf den Tragkörper 10 auf, wodurch eine verliersichere Verbindung gewährleistet ist. Figur 6 zeigt den auf das Tragkörperteil 10 aufgeschnappten Ring 8.

### Positionszahlenliste

- 1: Spindelmutter
- 2: Spindel
- 3: Kugel
- 4: Umlaufkanal
- 5: Umlaufkanal
- 6: Gewindebahn
- 7: Umlenkbereich
- 8: Ring
- 9: Ring
- 10: Tragkörper
- 11: Tragkörper
- 12: Hülse
- 13: Käfig
- 14: Käfig
- 15: Druckfeder
- 16: Schlitz
- 17: Tragkörperteil
- 18: Kugelbahn
- 19: Kugelbahnabschnitt
- 20: Kralle

## Patentansprüche

1. Kugelgewindetrieb bei dem eine Spindelmutter (1) auf einer Spindel (2) über Kugeln (3) wälzgelagert ist, welche Kugeln (3) als Kugelreihe in einem von der Spindel (2) und der Spindelmutter (1) begrenzten endlosen Umlaufkanal (4, 5) entlang einer Windung umlaufen, wobei die Spindelmutter (1) einen Ring (8, 9) aufweist, an dem die Kugeln (3) abwälzen, wobei umfangsseitig einander gegenüberliegende Enden des Rings (8, 9) einen Schlitz (16) begrenzen, der innerhalb eines Umlenkbereichs (7) des Umlaufkanals (4, 5) angeordnet ist, in dem die Kugeln (3) von einem Auslaufende dieser einen Windung zu einem Einlaufende dieser Windung umgelenkt werden, **dadurch gekennzeichnet, dass** die Spindelmutter (1) einen Tragkörper (10, 11) aufweist, in den der Ring (8, 9) gebettet ist, wobei ein einstückig an den Tragkörper (10, 11) angeformter Tragkörperteil (17) des Tragkörpers (10, 11) in den Schlitz (16) eingreift und für eine drehfeste Anordnung des Tragkörpers (10, 11) und des Ringes (8, 9) zueinander von dem einen Ende bis zu dem anderen Ende des Ringes (8, 9) reicht, und wobei das Tragkörperteil (17) mit einem eine Umlenkbahn des Umlenkbereichs (7) bildenden Kugelbahnabschnitt (19) und der Ring (8, 9) mit einer Kugelbahn (18) für die Kugeln (3) versehen sind.

2. Kugelgewindetrieb nach Anspruch 1, bei dem der Ring (8, 9) aus einem Blechstreifen als Stanzbiegeteil gebildet ist.

3. Kugelgewindetrieb nach Anspruch 2, bei dem der Ring (8) in axialer und Umfangsrichtung eine wenigstens annähernd gleiche Wanddicke aufweist.

4. Kugelgewindetrieb nach Anspruch 1, bei dem der Ring (8) und der Tragkörper (10) mittels eines Halteelementes verliersicher miteinander verbunden sind.

5. Kugelgewindetrieb nach Anspruch 4, bei dem das Halteelement durch mehrere über den Umfang des Ringes (8) verteilt angeordnete Krallen (20) aufweist.

6. Kugelgewindetrieb nach Anspruch 1, bei dem der Tragkörper (10, 11) aus insbesondere thermoplastischem Kunststoff im Spritzverfahren mit dem einstückig daran angeformten Tragkörperteil (17) gebildet ist.

7. Kugelgewindetrieb nach Anspruch 1, bei dem der Tragkörper (10, 11) aus Sinterwerkstoff im Sinterverfahren mit dem einstückig daran angeformten Tragkörperteil (17) gesintert ist.

8. Kugelgewindetrieb nach Anspruch 1, bei dem die Spindelmutter (1) eine Hülse (12) aufweist, in der der ringförmige Tragkörper (10, 11) angeordnet und gestützt ist.

## Claims

1. Ball screw drive in which a spindle nut (1) is mounted in a rolling fashion on a spindle (2) by means of balls (3), which balls (3) circulate as a ball row in an endless circulation channel (4, 5), which is delimited by the spindle (2) and the spindle nut (1), along a spiral, with the spindle nut (1) having a ring (8, 9) on which the balls (3) roll, with circumferentially opposite ends of the ring (8, 9) delimiting a slot (16) which is arranged within a deflecting region (7) of the circulation channel (4, 5), in which deflecting region the balls (3) are deflected from a run-out end of said one spiral to a run-in end of said spiral, **characterized in that** the spindle nut (1) has a support body (10, 11) into which the ring (8, 9) is embedded, with a support body part (17) of the support body (10, 11), which support body part (17) is integrally formed on the support body (10, 11), engaging into the slot (16) and extending from one end to the other end of the ring (8, 9) so as to provide a rotationally fixed arrangement of the support body (10, 11) and of the ring (8, 9) relative to one another, and with the support body part (17) being provided with a ball track section (19) which forms a deflecting path of the deflecting region (7), and the ring (8, 9) being provided with a ball track (18) for the balls (3).

2. Ball screw drive according to Claim 1, in which the ring (8, 9) is formed as a punched and bent part from a sheet-metal strip.

3. Ball screw drive according to Claim 2, in which the ring (8) has an at least approximately equal wall thickness in the axial direction and in the circumferential direction.

4. Ball screw drive according to Claim 1, in which the ring (8) and the support body (10) are captively connected to one another by means of a retaining element.

5. Ball screw drive according to Claim 4, in which the retaining element has a plurality of claws (20) arranged so as to be distributed over the circumference of the ring (8).

6. Ball screw drive according to Claim 1, in which the support body (10, 11) is formed from in particular thermoplastic material in an injection moulding process with the support body part (17) integrally formed thereon.

7. Ball screw drive according to Claim 1, in which the support body (10, 11) is sintered from sintered material in a sintering process with the support body part (17) integrally formed thereon.

8. Ball screw drive according to Claim 1, in which the spindle nut (1) has a sleeve (12) in which the annular support body (10, 11) is arranged and supported.

## Revendications

1. Vis d'entraînement à billes, dans laquelle un écrou de broche (1) est monté sur palier à roulement sur une broche (2) par le biais de billes (3), lesquelles billes (3) circulent sous forme d'une rangée de billes dans un canal périphérique (4, 5) sans fin, limité par la broche (2) et l'écrou de broche (1) le long d'une spire, l'écrou de broche (1) présentant une bague (8, 9), sur laquelle roulent les billes (3), des extrémités opposées l'une à l'autre du côté de la périphérie de la bague (8, 9) limitant une fente (16), qui est disposée à l'intérieur d'une région de déflexion (7) du canal périphérique (4, 5) dans lequel les billes (3) sont déviées d'une extrémité de sortie de cette première spire vers une extrémité d'entrée de cette spire, **caractérisée en ce que** l'écrou de broche (1) présente un corps porteur (10, 11) dans lequel est encastrée la bague (8, 9), une partie (17) du corps porteur (10, 11) façonnée d'une seule pièce sur le corps porteur (10, 11) venant en prise dans la fente (16) et s'étendant d'une extrémité à l'autre de la bague (8, 9) en vue d'un agencement solidaire en rotation du corps porteur (10, 11) et de la bague (8, 9) l'un par rapport à l'autre, et la partie (17) du corps porteur étant pourvue d'une portion de piste de bille (19) formant une piste de déflexion de la région de déflexion (7) et la bague (8, 9) étant pourvue d'une piste de bille (18) pour les billes (3).

2. Vis d'entraînement à billes selon la revendication 1, dans laquelle la bague (8, 9) est formée d'un ruban de tôle servant de pièce pliée par estampage.

3. Vis d'entraînement à billes selon la revendication 2, dans laquelle la bague (8) présente, dans la direction axiale et périphérique, une épaisseur de paroi au moins approximativement identique.

4. Vis d'entraînement à billes selon la revendication 1, dans laquelle la bague (8) et le corps porteur (10) sont connectés l'un à l'autre de manière imperdable au moyen d'un élément de retenue.

5. Vis d'entraînement à billes selon la revendication 4, dans laquelle l'élément de retenue présente plusieurs griffes (20) réparties sur la périphérie de la bague (8).

6. Vis d'entraînement à billes selon la revendication 1, dans laquelle le corps porteur (10, 11) est formé notamment de plastique thermoplastique dans un procédé de pulvérisation avec la partie (17) du corps porteur façonnée d'une seule pièce sur celui-ci.

7. Vis d'entraînement à billes selon la revendication 1, dans laquelle le corps porteur (10, 11) est fritté à partir de matériau fritté dans un procédé de frittage avec la partie (17) du corps porteur façonnée d'une seule pièce sur celui-ci.

8. Vis d'entraînement à billes selon la revendication 1, dans laquelle l'écrou de broche (1) présente une douille (12) dans laquelle est disposé et supporté le corps porteur de forme annulaire (10, 11).
